# EUROPEAN PATENT APPLICATION

(11) **EP 1 666 286 A1**
(43) Date of publication of application: **07.06.2006**
(21) Application number: 04257503.5
(22) Date of filing: 02.12.2004
(51) Int. Cl.: B60H 1/22

(54) **Heating device**

(71) Applicant: Delphi Technologies Inc., Troy, MI 48077 (US)
(72) Inventor: Dupont, Bertrand, 8080 Bascharge (LU)
(74) Representative: Waller, Stephen

(57) **Abstract**

The heating device 1 contains two PTC heating elements 2 encased within an aluminium housing 4. A lower face of each heating element 2 is in contact with a contact sheet 3 whereby electrical energy is delivered to the heating elements 3. An upper face of each heating element 2 is in contact with an inner surface of the housing whereby heat from the heating element is transferred to the housing 4 by conductance. In order to electrically insulate the contact sheet 3 from the housing 4, an insulating sheet 5 is located between the lower face of contact sheet 3 and the housing 4, the insulating sheet being formed from a thin layer of silicone rubber.

## Description

The present invention relates to heating device and in particular an electrical heating device for use in a heating, ventilation and air conditioning device for a vehicle.

Heating devices are known containing semiconductor elements such as PTC (positive temperature coefficient) heating elements to convert electrical energy into heat. Such heating devices are compact and efficient and are thus particularly suitable for heating air or other fluids in a vehicle heating, ventilation and air conditioning (HVAC) system.
Such heating devices normally comprise an aluminium casing or housing encasing a plurality of PTC heating elements sandwiched against a contact sheet to supply electricity to the heating elements. It is necessary to electrically insulate the contact sheet from the aluminium housing to avoid short circuiting the contact sheet. In known heating devices this insulation is provided by a sheet of ceramic material located between the contact sheet and the housing. However, the use of such a ceramic sheet has a number of disadvantages. Firstly, the ceramic material is brittle and prone to damage during assembly and use of the heating device because the heating device is generally in the form of a thin, elongate strip and thus prone to flexing when exposed to bending loads during use. Secondly, the ceramic material has poor heat conductance and thus reduces the transfer of heat from the heating elements to the housing.

The present invention provides a heating device for converting electrical energy into heat energy, the heating device comprising at least one heating element, a contact sheet located in contact with the heating element(s), a housing or cover encasing the at least one heating element and the contact sheet, an insulating sheet being provided between the contact sheet and the housing to electrically insulate the contact sheet from the housing, the insulating sheet being formed from a heat conducting and flexible material.

Preferably the insulating sheet is formed from an elastic material, such as rubber. In a preferred embodiment the insulating sheet is formed from silicone rubber.

Preferably the insulating sheet is provided between a face of the contact sheet and the housing and extends between the sides of the insulating sheet and the sides of the housing to prevent electrical contact or arcing between the sides of the insulating sheet and the sides of the housing. In a preferred embodiment the insulating sheet extends beyond each side of contact sheet to a region between the sides of the at least one heating element and the sides of the housing.

A preferred embodiment of the present invention will now be described with reference to the accompanying drawings, in which:-
Figure 1 is a sectional side view of a heating device according to an embodiment of the present invention;
Figure 2 is sectional view on line A-A of Fig. 1.

The heating device 1 contains two PTC heating elements 2 encased within an aluminium housing 4. A lower face of each heating element 2 is in contact with a contact sheet 3 whereby electrical energy is delivered to the heating elements 3. An upper face of each heating element 2 is in contact with an inner surface of the housing whereby heat from the heating element is transferred to the housing 4 by conductance.

In order to electrically insulate the contact sheet 3 from the housing 4, an insulating sheet 5 is located between the lower face of contact sheet 3 and the housing 4, the insulating sheet being formed from a thin layer of silicone rubber.

Silicone rubber is a good thermal conductor and thus enhances the transfer of thermal energy from the heating elements 2 to the housing 4. Furthermore, silicone rubber is a flexible and elastic material and thus is not prone to damage during assembly and use of the heating device, unlike prior art ceramic insulators.

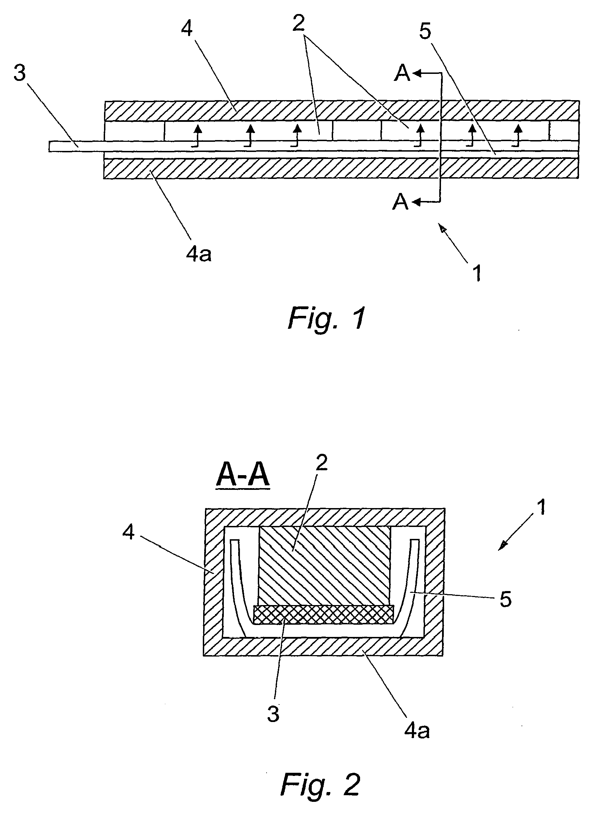

As shown in Fig. 2, in order to electrically insulate the sides of the contact sheet 3 from the inner sides of the housing 4 and to prevent arcing therebetween, the insulating sheet 5 is of sufficient width such that the sides of the insulating sheet 5 extend into the region between the heating elements 2 and the inner sides of the housing 4.

Whilst, in the preferred embodiment, silicone rubber is used to form the insulating sheet 5, it is envisaged that other materials having the required properties of heat conductance and flexibility might equally be used.

## Claims

1. A heating device for converting electrical energy into heat energy, the heating device comprising at least one heating element, a contact sheet located in contact with the at least one heating element, a housing or cover encasing the at least one heating element and the contact sheet, an insulating sheet being provided between contact sheet and the housing to electrically insulate the contact sheet from the housing, **characterised in that** the insulating sheet is formed from a heat conducting and flexible material.

2. A heating device as claimed in claim 1, wherein the insulating sheet is formed from an elastic material, such as rubber.

3. A heating device as claimed in claim 2, wherein the insulating sheet is formed from silicone rubber.

4. A heating device as claimed in any preceding claim, wherein the insulating sheet is provided between a face of the contact sheet and the housing and extends between the sides of the insulating sheet and the sides of the housing to prevent electrical contact or arcing between the sides of the insulating sheet and the sides of the housing.

5. A heating device as claimed in claim 4, wherein the insulating sheet extends beyond each side of the contact sheet to a region between the sides of the at least one heating element and the sides of the housing.
